# EUROPEAN PATENT APPLICATION

(11) **EP 3 650 611 A1**
(43) Date of publication of application: **13.05.2020**
(21) Application number: 17916551.9
(22) Date of filing: 07.07.2017
(51) Int. Cl.: E04D 12/00, H02S 20/23, F24S 25/61

(54) **SUPPORT FOR ROOF PANELS**

(71) Applicant: Galan Martin, Antonio, 28750 San Agustin de Guadalix (ES)
(72) Inventor: Galan Martin, Antonio, 28750 San Agustin de Guadalix (ES)
(74) Representative: Toro Gordillo, Ignacio Maria
(86) International application number: PCT/ES2017/070492
(87) International publication number: WO 2019/008196

(57) **Abstract**

The present invention relates to a support for roof panels, provided preferably and fundamentally for installation in metal roofs, which is secured without the need for mechanical elements or fasteners of any type. For this reason, the support is made up of a part which serves as a lower base, with a magnetic base formed on the bottom face (2) thereof, said base having a T-shaped flange protruding from the top of same, the upper base or surface (4) of which forms the bearing and support means for the roof panels, said panels being secured to said upper base via adhesive-coated sectors (5) onto which the roof panels are adhered.

## Description

### OBJECT OF THE INVENTION

The present invention relates to a support for roof panels, provided preferably and fundamentally for installation in metal roofs, which is secured without the need for mechanical elements or fasteners of any type.

The object of the invention is therefore to provide the market and the general public with an element that allows photovoltaic panels to be installed on metal roofs or surfaces without having to perforate the same, all in a convenient, quick and simple fashion, without compromising the seal of the roof.

### BACKGROUND OF THE INVENTION

When securing panels on roofs, using the corresponding horizontal beams, it is necessary to use fasteners and mechanical elements, such as auxiliary profiles, clamps and other similar elements that complicate these types of installations and make them more costly, given that it is necessary to drill holes through the roof panels, which usually affects the seal of the roof, resulting in the negative repercussions associated with the same, said holes having to be sealed, once the fasteners are inserted with resins, silicone or other similar insulating elements, which considerably increases the installation time.

### DESCRIPTION OF THE INVENTION

The support herein disclosed provides an entirely satisfactory solution to the aforementioned problem, based on a simple but highly efficient structure.

To this end, and more specifically, the support of the invention is made up of a part which serves as a base, with a laminar configuration, preferably rectangular, although it could have other configurations in accordance with the function thereof as a base without affecting the essence of the invention, the base on which a magnetic surface is defined on the support or bottom face thereof for securing the support on the corresponding metal beam, the base from which a T-shaped profile protrudes from the centre thereof, such that on the upper base that defines said profile, logically having a notable width, there are elements, preferably adhesives, that are distributed evenly on said upper surface, which allow two contiguous panels to be supported and secured, thereby avoiding having to use twice the number of parts, and allowing quick and simple securing of the panels to be carried out by simply facing them and gluing them to the support, which will have been previously secured in a way that is just as quick and easy by magnetisation to the corresponding roof or metal surface.

This way there is no need for mechanical fastening elements for securing the support and, therefore, the roof panels, which are not affected with regard to the seal thereof, the installation being much quicker that in conventional installations, likewise allowing them to be quickly and easily removed.

### DESCRIPTION OF THE DRAWINGS

As a complement to the description provided below, and for the purpose of helping to make the characteristics of the invention more readily understandable, in accordance with a preferred practical embodiment thereof, said description is accompanied by a set of figures, which by way of illustration and not limitation represent the following:
Figure 1 show a representation corresponding to a perspective view of a support for roof panels made according to the object of the present invention.
Figure 2 similar view to that of the previous figure, but in which two roof panels are schematically represented on said support.

### PREFERRED EMBODIMENT OF THE INVENTION

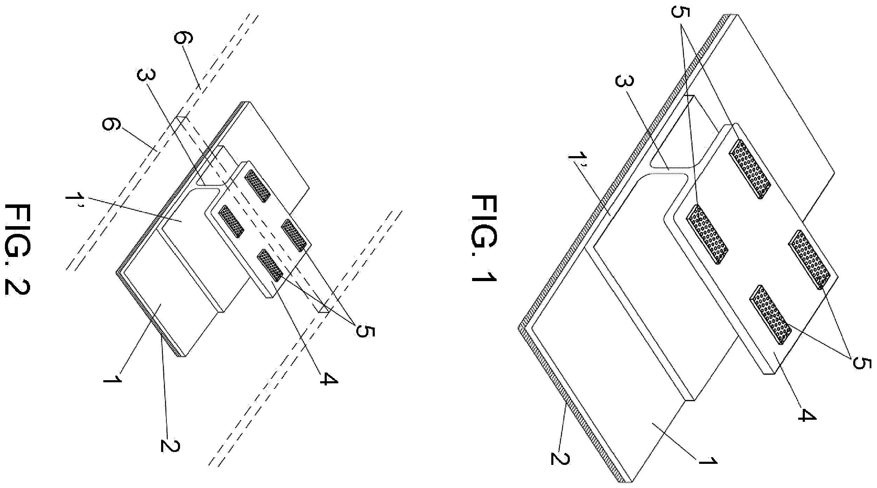

As can be seen in the figures described, in particular in Figure 1, the support of the invention is made from a metal base (1), on which a bottom magnetic face (2) is formed to be quickly and easily secured to the structure of the metal roof, while a T-shaped profile protrudes from the top of said metal base (1), in which a vertical branch (3) is defined as a spacer, and an upper base (4) with a considerable width, such that said T-shaped profile can come from the upper surface of the base (1) or form part of a second part (1') secured by means of welding to the previous part, providing greater rigidity and resistance to the assembly.

The upper base (4) has a series of adhesive-coated areas (5), which will initially be insulated by means of corresponding strips of waxed or silicon coated paper, adhesive-coated areas (5) that allow the panels (6) to be secured, either a pair of the same, as shown in Figure 2, or a single panel, based on the specific needs in each case.

It is clear that the advantages provided by the device of the invention are notable, given that it eliminates the need for anchoring elements, such as fasteners, holes, etc., considerably reducing the installation time.

## Claims

1. A support for roof panels, being provided to establish support and securing means of the corresponding panels that form part of a metal roof to the metal support structure of said roof, **characterised in that** it is made up of a part which serves as a lower base, with a magnetic base formed on the bottom face (2) thereof, said base having a T-shaped flange protruding from the top of same, the upper base or surface (4) of which forms the bearing and support means for the roof panels, said panels being secured to said upper base via adhesive-coated sectors (5) onto which the roof panels are adhered.

2. The support for roof panels, according to claim 1, **characterised in that** the T-shaped flange comes from the base of the support.

3. The support for roof panels, according to claim 1, **characterised in that** the T-shaped flange protrudes from a base which is, in turn, secured to the lower base of the support by welding, providing rigidity to the assembly.
